# EUROPEAN PATENT SPECIFICATION

(11) **EP 1 396 629 B1**
(45) Date of publication and mention of the grant of the patent: **17.10.2007**
(21) Application number: 03018253.9
(22) Date of filing: 11.08.2003
(51) Int. Cl.: F02D 41/34, F02D 37/02, F02P 7/067, G01D 5/14, G01D 5/245, G01P 3/487, G01P 3/489, H02K 29/08

(54) **Rotation Detecting Apparatus**
Rotationserfassungsvorrichtung
Appareil détecteur de rotation

(30) Priority: 05.09.2002 JP 2002260109
(43) Date of publication of application: 10.03.2004
(73) Proprietor: HONDA GIKEN KOGYO KABUSHIKI KAISHA, Minato-ku, Tokyo (JP)
(72) Inventor: Ota, Atsuo, 4-1, Chuo 1-chome, Wako-shi, Saitama (JP); Sakamoto, Tomokazu, 4-1, Chuo 1-chome, Wako-shi, Saitama (JP); Ikui, Kuniaki, 4-1, Chuo 1-chome, Wako-shi, Saitama (JP)
(74) Representative: Liska, Horst

(56) References cited:
- EP-A- 0 372 134
- US-A- 5 663 641
- PATENT ABSTRACTS OF JAPAN vol. 1998, no. 04, 31 March 1998 (1998-03-31) -& JP 09 311053 A (YAZAKI CORP), 2 December 1997 (1997-12-02)
- PATENT ABSTRACTS OF JAPAN vol. 1996, no. 11, 29 November 1996 (1996-11-29) -& JP 08 178692 A (JAPAN SERVO CO LTD), 12 July 1996 (1996-07-12)
- PATENT ABSTRACTS OF JAPAN vol. 010, no. 247 (P-490), 26 August 1986 (1986-08-26) -& JP 61 076911 A (JAPAN SERVO CO LTD), 19 April 1986 (1986-04-19)

## Description

The present invention relates to a rotation detecting apparatus according to the preamble part of claim 1, and, more particularly, to a rotation detecting apparatus which outputs a detection signal usable for the control of a motor coupled to an engine and for the control of the ignition/fuel injection of the engine.

Such an apparatus is known from JP-A-09311053. This document discloses discloses a revolution sensor that is constituted of a sensor magnet and of magneto-electric conversion elements. The sensor magnet itself comprises two magnet bodies composed of ring-shaped bodies provided with magnetization parts for N-poles and S-poles at different pitches. These two magnet bodies are arranged on concentric circles with reference to an axis of rotation of the known sensor. Radially between these magnet bodies a shielding member made of magnetic material is arranged to cut off a leakage flux between both magnet bodies.

Each of the two magneto-electric conversion elements is associated to one of the magnet bodies. When the sensor magnet is turned a plurality of kinds of pulse outputs are obtained. Due to the different pitches of the N- and S-poles of the two magnet bodies the pulse numbers per rotation are different for each conversion element.

Document JP-A-61076911 discloses a revolution sensor according to the preamble of claim 1 that outputs a reference position signal using a double track magnetic encoder and several magnetic resistance sensors. One of the tracks of the encoder has only one pair of poles magnetized therein.

In the following, further technical background is discussed:

To start the operation of an engine, a starter motor is coupled to the crankshaft of the engine. The starter motor has a three-phase stator coil which is driven with a current supplied successively to each of the phases of the stator coil through a driver circuit in accordance with the angle of the crankshaft. For the determination of the energizing timing, therefore, information on the rotational position of the crankshaft to which the starter motor is coupled is detected. The information on the rotational position of the crankshaft is also detected for the control of a time for fuel injection and a time for ignition.

In either of the cases, a different function is required of a sensor (hereinafter referred to as the "rotation sensor") for detecting the information on the rotational position. A pulse output which allows the determination of steps or regions resulting from equal division of a 360° electrical cycle is required of a rotation sensor for motor but an output indicative of a reference position in one rotation of the motor is not required. By contrast, a pulse output resulting from equal division of one rotation of the engine and an output indicative of the reference position in one rotation are required of a rotation sensor for controlling the times for fuel injection and for ignition.

Therefore, common use of signals outputted at equal intervals from the rotation sensor for motor for the control of the motor and for the control of fuel injection and the provision of an additional rotation sensor for detecting only the reference position in one rotation can be considered.

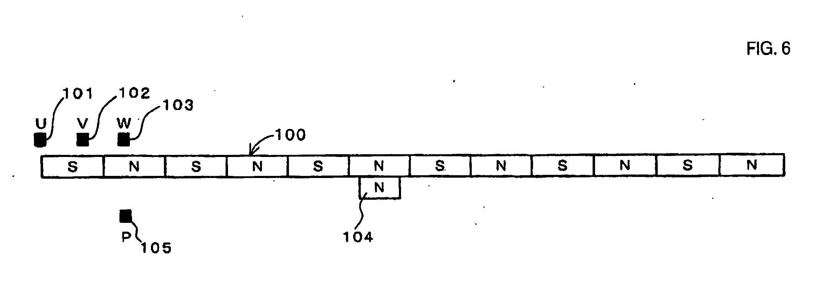

FIG. 6 is a developed view of the rotation sensors and a sensor magnet showing an example of the layout of a magnetized zone detected by the rotation sensors. In the drawing, a magnetized zone 100 for causing the rotation sensors to output pulses at equal intervals is disposed along the circumference of a rotator such as the crankshaft of the engine or the rotor of the motor rotating integrally with the crankshaft. The magnetized zone 100 is magnetized to alternate between N and S poles with equal lengths (at a 30° center angle). Respective rotation sensors 101, 102, and 103 for the phases U, V, and W of the motor are arranged with equal spacings (20° spacings) in opposing relation to the magnetized zone 100. The position in the magnetized zone 100, i.e., the rotation angle of the crankshaft is detected based on detection outputs from the individual rotation sensors 101 to 103 . To determine the absolute position, i.e., reference position of the crankshaft, a magnetized portion 104 having only one region magnetized in one rotation is provided other than the magnetized zone 100. The magnetized portion 104 is detected once during one rotation by the rotation sensor 105, which outputs a pulse. The pulse can be used as information on the reference position in one rotation.

Since the foregoing magnetized portion 104 has only one part magnetized in one rotation, the output from the rotation sensor 105 becomes unstable in the non-magnetized region thereof under the influence of noise when the motor was energized.

Since the magnetized zone 100 and the magnetized portion 104 have different configurations and different magnetization patterns, the procedure for magnetization is intricate. Accordingly, magnetization patterns formed through easy magnetization are in demand.

It is an object of the present invention to provide a rotation detecting apparatus including a sensor magnet having a pattern formed through easy magnetization, being noise-resistant and allowing to detect a well-defined reference position.

This object is obtained by a rotation detecting apparatus exhibiting all features of claim 1.

An embodiment of the present invention is a rotation detecting apparatus for sensing a magnetized portion of an annular sensing magnet provided on a rotating portion of a motor to detect a reference position in one rotation of the motor and a rotation angle thereof, the apparatus comprising: the annular sensor magnet having a first magnetized zone in which a plurality of magnetized portions of alternate polarities are arranged along a rotating direction of the rotating portion and a second magnetized zone inwhichaplurality of magnetized portions and one magnetized portion different in polarity from the magnetized portions are formed along a circumferential direction of the second magnetized zone, the magnetized portions of the second magnetized zone being positioned in predetermined regions containing borders between the magnetized portions of the first magnetized zone; three first sensors disposed with specified spacings along a circumferential direction of the first magnetized zone to output, as rotation angle detection signals, signals on levels corresponding to the polarities of the polarized portions of the first magnetized zone; a second sensor disposed between two of the first sensors to output a detection signal on a level corresponding to the polarity of each of the polarized portions of the second magnetized zone; and determining means for determining the level pf the detection signal from the second sensorwhen the detection signal from the one of the first sensors other than those disposed on both sides of the second sensor, which is in one direction, is reversed to the other direction and determining a position of the motor when the level is determined to have a predetermined value as a reference position in one rotation.

According to a further preferred embodiment , each of the output levels of the second sensor positioned in a predetermined relation with the first sensors differs at only one position from that at any other position when the rotation angle detection signal from the first sensor, which is in one direction, is reversed to the other direction during one rotation of the rotating portion, e.g., the rotator of the motor, i.e. , on a plurality of rising or falling edges. Accordingly, the reference position in one rotation of the motor is determined by recognizing the difference in the level of the second sensor. In addition, since the two magnetized zones can be formed by using similar magnetization patterns, easy magnetization is performed. Since the sensor magnet is magnetized around the entire circumference thereof, it is less susceptible to the influence of noise.

In a further preferred, embodiment of the present invention the second magnetized zone, is disposed such that the individual magnetized portions thereof are in spaced apart relation. Even if the magnetized portions are not continuous, the output of the second sensor is judged only on each of the rising or falling edges of the first sensors so that the output is not affected by noise from otherwhere upon the detection of a non-magnetized portion.

According to a still further preferred embodiment of the present invention the motor has a three-phase stator coil and is constituted such that the detection signal from the first magnetic sensor its supplied to driver means four supplying power to the stator coil. According to this preferred embodiment each of the three first sensors outputs a signal which alternates depending on the length of each of the magnetized portions and on the polarity thereof and a power supply timing for each of the phases of the stator coil can be determined depending on each of the outputs.

The present invention proposes a yet further preferred embodiment in which the motor is a starter motor coupled to the engine and is constituted such that the detection signals from the first and second magnetic sensors are supplied to an ignition control unit of the engine and to a fuel injection control unit thereof. Since the crank angle of the engine to which the motor is coupled is detected based on the reference position in one rotation of the motor detected by the second sensor and on the rotation angle detected by the first sensors, the signals can be used as signals for controlling the time for ignition and the time for fuel injection.

According to the invention as recited in claims 1 to 4, the polarities are distinct over the entire sensor magnet, which is different from the case where the second magnetized zone of the sensor magnet is magnetized to have only an S pole or an N pole, so that noise immunity is improved. Since the first and the second magnetized zones have similar magnetization patterns, magnetization is easy and the fabrication process is simplified.

Since one of the detection signals from the first sensors can be used as a trigger outputted for the determination of the reference position, a load on control means for generating the trigger is prevented from increasing.
Fig. 1 is a cross-sectional view of a motor including a rotation detecting apparatus according to an embodiment of the present invention.
Fig. 2 is a principal-portion block diagram showing the motor including the rotation detecting apparatus and a control device for an engine.
Fig. 3 is an output timing chart for sensors corresponding to a sensor magnet which does not show the features of claim 1.
Fig. 4 is an output timing chart for sensors corresponding to a sensor magnet according to an embodiment of the present invention.
Fig. 5 is a functional block diagram of an output control unit for a reference position sensor.
Fig. 6 is a developed view showing the magnetized state of a sensor magnet according to a conventional embodiment.

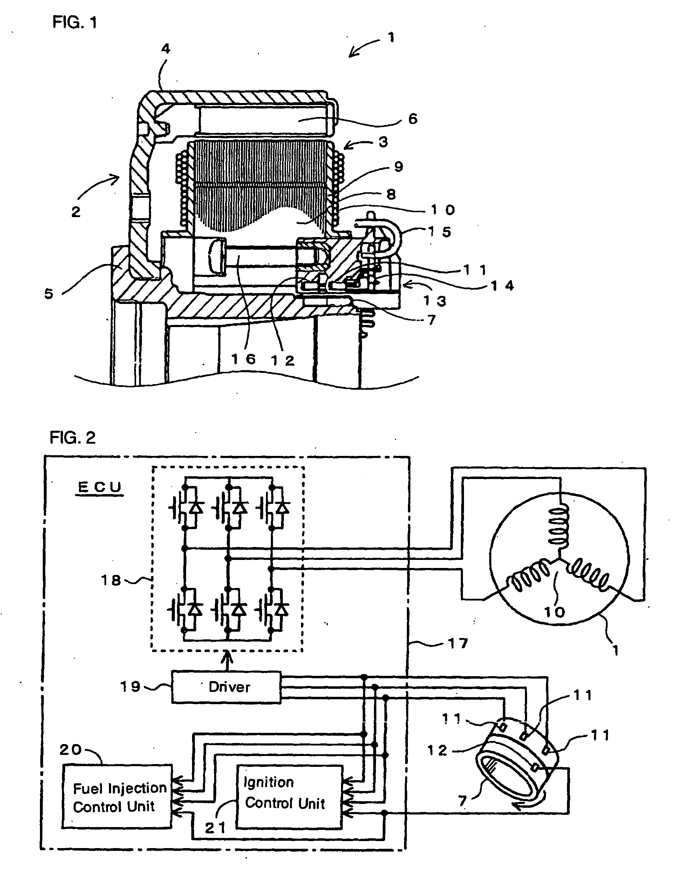

Referring to the drawings, the present invention will be described herein below in detail . FIG. 1 is a cross-sectional view of a starter motor (hereinafter simply referred to as the "motor") of an engine having a rotation detecting apparatus according to the present invention. In the drawing, the motor 1 has a rotor 2 and a stator 3 . The rotor 2 includes a cup-shaped yoke 4, a sleeve, i.e., hub 5 for coupling the yoke 4 to the crankshaft (not shown) of the engine, and a plurality of magnets 6 arranged along the inner circumference of the yoke 4 . A sensor magnet 7 for detecting rotation has been provided in inserted relation in the outer circumference of the end portion of the sleeve 5 . The sensor magnet 7 has magnetized zones in two distinct rows for controlling the motor and for detecting a reference position, respectively. A specific magnetized structure will be described later.

The stator 3 includes a stator core 8 and a stator coil 10 wound around the stator core 8 with an insulating material 9 interposed therebetween. The stator coil 10 is a three-phase coil. The stator core 8 is fastened to the casing of the engine with a bolt (none of these is depicted) . The stator 3 comprises a sensor package 13 including four magnetic sensors (e.g. , hole elements) 11 and 12 in two groups which are disposed in opposing relation to the individual magnetized zones of the sensor magnet 7. The magnetic sensors 11 are for controlling the motor (hereinafter referred to as the "sensors for motor") and the three magnetic sensors 11 are provided to correspond to the phases U, V, and W of the motor 1. On the other hand, the magnetic sensor 12 is for detecting the reference position in one rotation (hereinafter referred to as the "reference position sensor". The sensors 11 for motor and the reference position sensor 12 switch between HIGH (high level) and LOW (low level) states under the magnetic action of the corresponding magnetized zones of the sensormagnet 7 . The sensor package 13 includes a substrate 14 for supporting the sensors 11 for motor and the reference position sensor 12 and lead lines 15 connecting the sensors 11 and 12 to a control unit (not shown) and is fastened to the stator 3 with a bolt 16.

FIG. 2 is a block diagram showing the respective principal portions of the motor and an engine control device. An ECU 17 has a rectifying circuit 18 composed of, e.g., MOS-FETs and a driver circuit 19 for supplying a gate signal to each of the FETs of the rectifying circuit 18. Detection signals for the individual phases of the motor 1 are detected by the sensors 11 for motor and supplied to the driver circuit 19.

The ECU 17 further has a fuel injection control unit 20 and an ignition control unit 21. The fuel injection control unit 20 and the ignition control unit 21 determine the rotation angle of the engine, i.e., the rotation angle of the motor 1 coupled to the crankshaft of the enginebasedon detection signals from the sensors 11 for motor and on a detection signal for the reference position in one rotation of the motor 1, which is from the reference position sensor 12, and determine the time for fuel injection and the time for ignition. Drive signals are supplied to a fuel injection valve and to an ignition device which are not shown at the time for fuel injection and at the time for ignition. Specifically, the fuel injection valve is opened on a specified duty and a high pressure is generated in the ignition device.

The motor 1 can be operated as a power generator after the engine was once started to operate. The stator coil 10 of the motor 1 is rotated by the engine to output a three-phase alternating current. The alternating current can be converted to a direct current at a specified voltage and accumulated in a buttery. Although an AC/DC converter for converting the alternating current to the direct current and a regulator for adjusting the voltage are provided, the depiction thereof is omitted since they are not the principal portions of the present invention.

During the operation, the rotor 2 comprising a magnet 6 is driven with a current supplied sequentially by the driver circuit 19 to the stator coil 10 in accordance with the rotation angle detected by the sensors 11 for motor. Since the crankshaft of the engine is coupled to the rotor 2 of the motor 1 via the sleeve 5, cranking is effected by the rotation of the rotor 2. If the firing rotational speed is reached, the engine is fired to start self-sustained operation. After the self-sustained operation is started, a control system is switched to the side of the power generator so that the motor 1 is allowed to operate as the engine power generator.

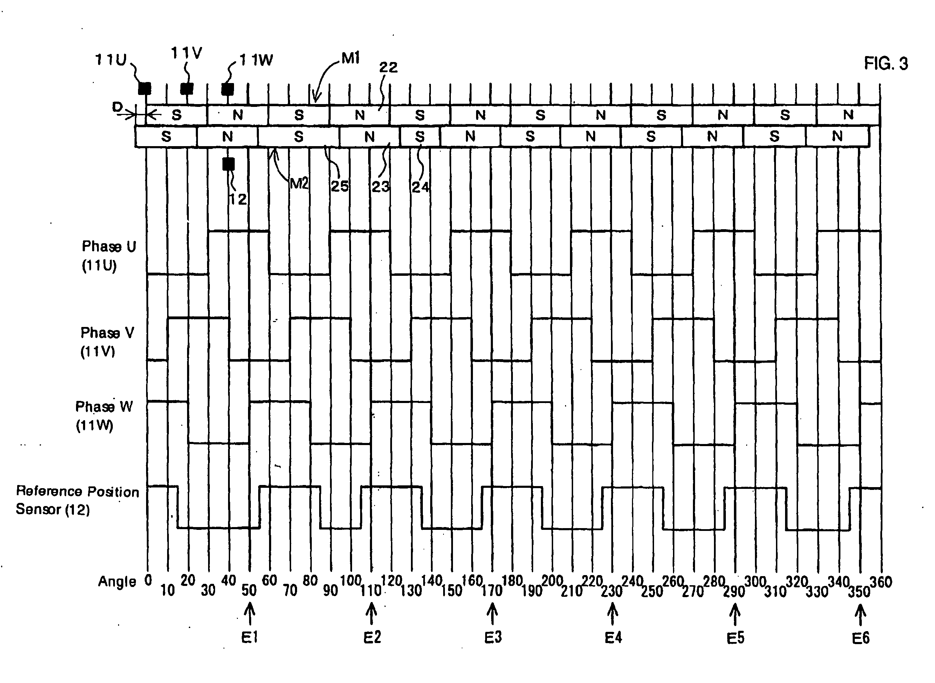

Fig 3; showing related art that is not covered by claim 1, is a developed view showing the magnetization of the sensor magnet and the placement of the sensors and an output-level timing chart. As described above, the magnetized zones M1 and M2 are formed integrally in the ring-shaped sensor magnet 7. Sensors (11U, 11V, and 11W) for motor for the phases U, V, and W are disposed in opposing relation to the magnetized zone M1, while the reference position sensor 12 is disposed in opposing relation to the magnetized zone M2 . One of the sensors 11U, 11V, and 11W for motor is juxtaposed with the reference position sensor 12 at the same position in the rotating direction of the rotor 2. In this example, the reference position sensor 12 is juxtaposed with the sensor 11W for motor. The sensor 11W for motor and the reference position sensor 12 need not necessarily be juxtaposed at the same position. It is sufficient for the sensor 11W for motor and the reference position sensor 12 to be positioned such that, when the level of the detection signal from the sensor 11W is inverted a plurality of times in one rotation, i.e., on the rising or falling edges of the signal, the detection signal from the reference position sensor 12 differs only once from that at any other time.

In each of the magnetized zones M1 and M2, N poles and S poles are alternately arranged. However, the magnetized zones M1 and M2 are magnetized such that the magnetic poles of one of the magnetized zones M1 and M2 are shifted in a given amount in the rotating direction of the rotor 2 from those of the other. The direction of mutual shif ting is reversed only at one position.

In the drawing, e.g., the poles of the magnetized zone M2 are shifted as a whole in the leftward direction by a distance D from those of the magnetized zone M1. That is, the poles (e.g., the N poles) of the magnetized zone M2 are shifted leftward with respect to those of the same polarity of the magnetized zone M1. However, at only one position, i.e., the N pole 23 of the magnetized zone M2 is shifted in the rightward direction with respect to the N pole 22 of the magnetized zone M1 so that the length of the right adjoining S pole 24 is smaller and the length of the left adjoining S pole 25 is larger accordingly.

Variations in output level were measured when the sensor magnet 7 is moved in the leftward direction of FIG. 3, i.e., rotated. It is assumed that each of the sensors 11 (11U, 11V, and 11W) and 12 outputs a HIGH signal when the N pole of the magnetized zones is detected and outputs a LOW signal when the S pole of the magnetized zones is detected. If the outputs of the reference position sensor 12 on the rising edges of the sensor 11W for motor are observed in the drawing, the output observed with one timing is different from the outputs observed with the other timings. Specifically, the output of the reference position sensor 12 is LOW only on the edge E1 of the six rising edges E1 to E6 of the sensor 11W for motor, while the output of the reference position sensor 12 is HIGH on each of the other edges E2 to E6.

Accordingly, the detection signals from the sensors 11U, 11V, and 11W for motor outputted periodically with specified pulse widths in accordance with the lengths of the poles (magnetization lengths in the circumferential direction) provide power supply timings for the individual phases of the stator coil 10. By determining whether or not the output signal from the reference position sensor 12 is LOW on each of the rising edges of the sensor 11W for motor, it can be determined whether or not the reference position in one rotation of the motor 1 is detected.

It is also possible to determine whether or not the output of the reference position sensor 12 is HIGH on each of the falling edges of the sensor 11W for motor and determine that the reference position is detected when the output is HIGH. The reference position can also be determined by determining the output of the reference position sensor 12 to be on the HIGH or LOW level on each of the rising or falling edges of the detection signal from that one of the sensors 11U to 11W for motor disposed.in a predetermined positional relationship with the reference position sensor 12. However, the reference position sensor 12 is disposed at a previously set position in terms of the cycle of the engine since the reference position sensor 12 serves as a basis for the time for ignition and the time for fuel injection.

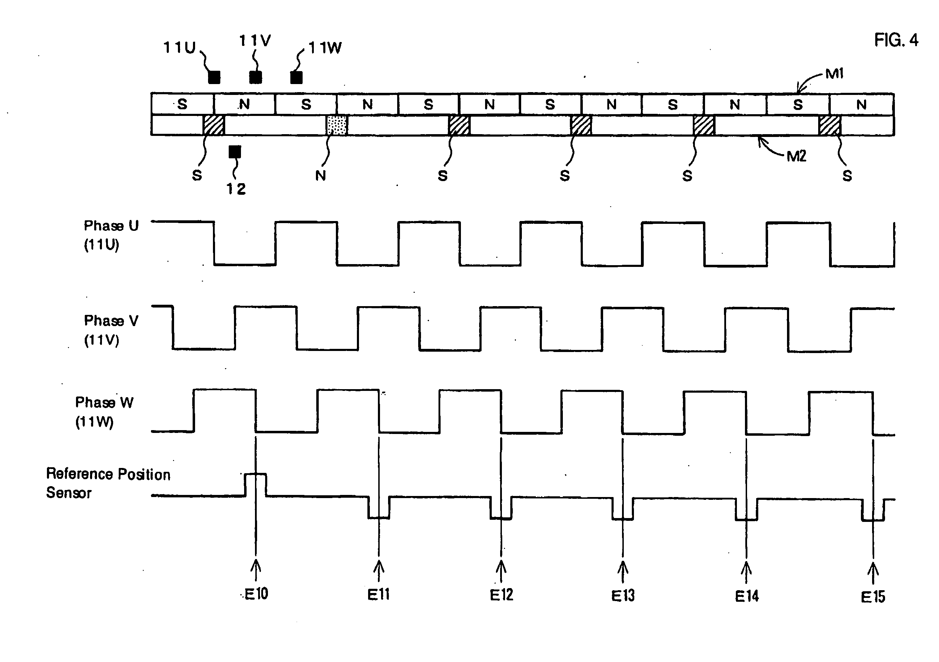

FIG. 4 is a developed view showing the magnetization of a sensor magnet and the placement of sensors and an output timing chart according to an embodiment of the present invention. In the drawing, the sensors (11U, 11V, and 11W) for motor for the phases U, V, and W are disposed in opposing relation to a magnetized zone M1, while the reference position sensor 12 is disposed in opposing relation to a magnetized zone M2. The sensors 11U, 11V, and 11W for motor are disposed with 20° spacings, while the reference position sensor 12 is provided at a middle point between the sensors 11U and 11V for motor.

In the magnetized zone M1, the N poles and the S poles are alternately and continuously arranged with a 30° pitch, while the magnetic poles are arranged in spaced apart, not continuous, relation in the magnetized zone M2. In the example of FIG. 4, in the magnetized zone M2, the magnetic poles each of which is 10' long are arranged with 60' spacings and only one of the six poles has a polarity different from the polarities of the other poles. In short, the one magnetic pole is an N pole and the other magnetic poles are S poles . Each of the magnetic poles in the magnetized zone M2 is disposed to span across the border between the two adj acent magnetic poles in the magnetized zone M1.

As shown in the timing chart for the outputs of the sensors when the sensor magnet 7 moves in the leftward direction in FIG. 4, i.e., rotates, the sensors 11U, 11V, and 11W for motor output detection signals having a specified phase difference therebetween depending on the polarities in the magnetized zone M1. On the other hand, the reference position sensor 12 outputs a detection signal depending on each of the polarities in the magnetized zone M2. The magnetic poles in the magnetized zone M2 are small in length and spaced apart so that the detection signal from the reference position sensor 12 is indefinitely HIGH or LOW in the intervals between the magnetic poles. In the present embodiment, it is sufficient for the output of the reference position sensor 12 to be definitely HIGH or LOW at least in the magnetized regions.

In these outputs, the detection signal from the reference position sensor 12 is determined to be HIGH or LOW on each of the falling edges E10 to E15 of the sensor 11W for motor. If the detection signal is HIGH, it is determined that the reference position in one rotation is detected. In this example, the detection signal is HIGH only at the trigger position E10 of the trigger positions E10 to E15.

According to this embodiment, the output of the reference position sensor 12 is read by using the signal from the sensor 11W for motor as a trigger and the signal corresponding to the magnetized portion of the magnetized zone M2 is surely outputted at the position from the reference position sensor 12 so that the output is less susceptible to the influence of noise.

In this embodiment of the invention, the magnetized zones M1 and M2 may also have polarities obtained by reversing those in the foregoing example. In that case, the detection signal from the reference position sensor 12 is determined to be LOW or HIGH on each of the rising edges of the sensor 11W for motor. If the detection signal is LOW, it is determined that the reference position in one rotation is detected.

In another example, the output of the reference position sensor 12 was judged by using the detection signal from the sensor 11W for motor as a trigger. However, modification is made to judge the output of the reference position sensor 12 by using each of the falling edges of the sensor 11U for motor as a trigger if, e.g., the reference position sensor 12 is disposed between the sensors 11V and 11W for motor. Thus, the present invention is not limited to the foregoing embodiments and modification can be made.

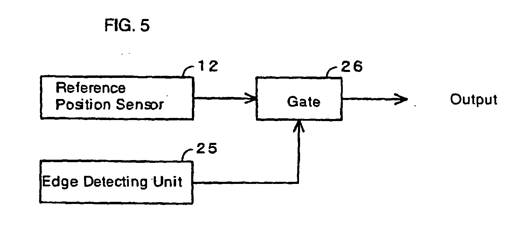

FIG. 5 is a principal-portion functional block diagram for the detection of the reference position according to the present embodiment. In the drawing, an edge detecting unit 25 detects the rising or falling edges of the sensors 11 for motor. Based on the polarities in the magnetized zones M1 and M2 and on the positional relationship between the sensors 11 (11U, 11V, and 11W) for motor and the reference position sensor 12, it is predetermined whether the edge detecting unit 25 detects the rising edges or falling edges of the detection signal. It is also predetermined which one of the sensors 11U to 11W for motor is used as the target of edge detection

It is assumed that the detection signal from the reference position sensor 12 is outputted via a gate 26. The gate 26 is opened when the edge detection signal is supplied from the edge detecting unit 25 so that the detection signal from the reference position sensor 12 is outputted effectively.

Sensors for motor and a reference position sensor are integrated in a sensor magnet for detection.

An annular sensor magnet is formed with a magnetized zone M1 corresponding to sensors 11U, 11V, and 11W for motor and with a magnetized zone M2 corresponding to a reference position sensor 12. The individual magnetized portions of the magnetized zone M2 are shifted as a whole in a leftward direction by a distance D from the magnetized zone M1. However, the direction of shif ting has been partly reversed. Specifically, the magnetized portion 23 of the magnetized zone M2 is shifted in the right direction so that the magnetized portions 24 and 25 are narrowed accordingly. In this magnetized structure, the level of an output of the reference position sensor 12 is determined by generating triggers E1 to E6 on the rising edges of the sensor 11W for motor. Since the level is determined to be LOW only at one position, the output of the reference position sensor is fetchedbased on the determination.

## Claims

1. A rotation detecting apparatus for sensing a magnetized portion of an annular sensing magnet (7) provided on a rotating portion of a motor (1) to detect a reference position in one rotation of said motor (1) and a rotation angle thereof, said apparatus comprising:
the annular sensor magnet (7) having a first magnetized zone (M1) in which a plurality of magnetized portions of alternate polarities are arranged along a rotating direction of said rotating portion and a second magnetized zone (M2) in which a plurality of magnetized portions are formed along a circumferential direction of said second magnetized zone (M2), the magnetized portions of said second magnetized zone (M2) being positioned in predetermined regions containing borders between the magnetized portions of said first magnetized zone (M1);
a first sensor assembly (11 U, 11 V, 11 W) disposed to output, as rotation angle detection signals, signals on levels corresponding to the polarities of the polarized portions of said first magnetized zone (M1);
a second sensor (12) disposed to output a reference position detection signal on a level corresponding to the polarity of each of the polarized portions of said second magnetized zone (M2); and
determining means for determining the level of the reference position detection signal from said second sensor (12),
**characterized in that**
one magnetized portion of said second magnetized zone (M2) is different in polarity from the remaining magnetized portions of said second magnetized zone (M2),
**in that**, further, said first sensor assembly (11 U, 11V, 11W) consists of three first sensors (11) disposed with specified spacings along a circumferential direction of said first magnetized zone (M1),
**in that** said second sensor (12), as a reference position sensor (12), is disposed at a middle point between two (11 U, V) of said first sensors (11 U, 11 V, 11 W), and
**in that** said determining means is adapted to use an edge of a signal, output from that one (11W) of the first sensors (11U, 11V, 11W) other than those (11U, 11 V) between which said second sensor (12) is disposed, as a trigger for determining the level of said reference position detection signal, wherein said determining means is further adapted to determine a position of said motor (1) as a reference position in one rotation when said level of said reference position detection signal is determined to have a predetermined value.

2. The rotation detecting apparatus of claim 1, wherein said second magnetized zone (M2) is disposed such that the individual magnetized portions thereof are in spaced apart relation.

3. The rotation detecting apparatus of claim 1 or 2, wherein said motor (1) has a three-phase stator coil (10) and is constituted such that the detection signal from said first magnetic sensor (11) is supplied to driver means (19) for supplying power to said stator coil (10).

4. The rotation detecting apparatus of any one of claims 1 to 3, wherein said motor (1) is a starter motor coupled to the engine and is constituted such that the detection signals from said first and second magnetic sensors (11, 12) are supplied to an ignition control unit (21) of said engine and to a fuel injection control unit (20) thereof.

## Patentansprüche

1. Drehungserfassungsvorrichtung zum Erfassen eines magnetisierten Abschnitts eines ringförmigen Erfassungsmagneten (7), welcher an einem drehenden Abschnitt eines Motors (1) vorgesehen ist, um eine Bezugsposition in einer Drehung des Motors (1) und einen Drehwinkel desselben zu erfassen, wobei die Vorrichtung umfasst:
den ringförmigen Sensormagneten (7), welcher eine erste magnetisierte Zone (M1) aufweist, in der eine Mehrzahl von magnetisierten Abschnitten abwechselnder Polaritäten entlang einer Drehrichtung des drehenden Abschnitts angeordnet ist, und welcher eine zweite magnetisierte Zone (M2) aufweist, in der eine Mehrzahl von magnetisierten Abschnitten entlang einer Umfangsrichtung der zweiten magnetisierten Zone (M2) ausgebildet ist, wobei die magnetisierten Abschnitte der zweiten magnetisierten Zone (M2) in vorbestimmten Bereichen positioniert sind, welche Grenzen zwischen den magnetisierten Abschnitten der ersten magnetisierten Zone (M1) enthalten;
eine erste Sensoranordnung (11U, 11V, 11W), welche angeordnet ist, um als Drehwinkelerfassungssignale Signale auf Pegeln auszugeben, welche den Polaritäten der polarisierten Abschnitte der ersten magnetisierten Zone (M1) entsprechen;
einen zweiten Sensor (12), welcher angeordnet ist, um ein Bezugspositionserfassungssignal auf einem Pegel auszugeben, welcher der Polarität eines jeden der polarisierten Abschnitte der zweiten magnetisierten Zone (M2) entspricht; und
Bestimmungsmittel zum Bestimmen des Pegels des Bezugspositionserfassungssignals von dem zweiten Sensor (12),
**dadurch gekennzeichnet, dass** ein magnetisierter Abschnitt der zweiten magnetisierten Zone (M2) eine Polarität aufweist, welche von den übrigen magnetisierten Abschnitten der zweiten magnetisierten Zone (M2) verschieden ist,
dass ferner die erste Sensoranordnung (11U, 11V, 11W) aus drei ersten Sensoren (11) besteht, welche mit spezifizierten Abständen entlang einer Umfangsrichtung der ersten magnetisierten Zone (M1) angeordnet sind,
dass der zweite Sensor (12) als ein Bezugspositionssensor (12) bei einem Mittelpunkt zwischen zwei (11U, V) der ersten Sensoren (11U, 11V, 11W) angeordnet ist, und
dass die Bestimmungsmittel dazu ausgebildet sind, einen Rand eines Signals, welches von dem einen (11W) der ersten Sensoren (11U, 11V, 11W) ausgegeben wird, welcher ein anderer ist als jene (11U, 11V) zwischen denen der zweite Sensor (12) angeordnet ist, als einen Auslöser zu verwenden, um den Pegel des Bezugspositionserfassungssignals zu bestimmen, wobei die Bestimmungsmittel ferner dazu ausgebildet sind, eine Position des Motors (1) als eine Bezugsposition in einer Drehung zu bestimmen, wenn bestimmt wird, dass der Pegel des Bezugspositionserfassungssignals einen vorbestimmten Wert aufweist.

2. Drehungserfassungsvorrichtung nach Anspruch 1, bei welcher die zweite magnetisierte Zone (M2) derart angeordnet ist, dass die einzelnen magnetisierten Abschnitte derselben mit Abstand voneinander angeordnet sind.

3. Drehungserfassungsvorrichtung nach Anspruch 1 oder 2, bei welcher der Motor (1) eine dreiphasige Statorspule (10) aufweist und derart aufgebaut ist, dass das Erfassungssignal von dem ersten magnetischen Sensor (11) Treibermitteln (19) zum Zuführen von Energie zu der Statorspule (10) zugeführt wird.

4. Drehungserfassungsvorrichtung nach einem der Ansprüche 1 bis 3, bei welcher der Motor (1) ein mit der Maschine gekoppelter Anlassermotor ist und derart aufgebaut ist, dass die Erfassungssignale von den ersten magnetischen Sensoren und dem zweiten magnetischen Sensor (11, 12) einer Zündungssteuer/regeleinheit (21) der Maschine sowie einer Kraftstoffeinspritzsteuer/regeleinheit (20) derselben zugeführt werden.

## Revendications

1. Appareil de détection de rotation destiné à détecter une partie magnétisée d'un aimant de détection annulaire (7) prévu sur une partie rotative d'un moteur (1) afin de détecter une position de référence lors d'une rotation dudit moteur (1) et un angle de rotation de celui-ci, ledit appareil comprenant :
l'aimant de détection annulaire (7) ayant une première zone magnétisée (M1) dans laquelle plusieurs parties magnétisées ayant des polarités alternées sont agencées le long d'une direction de rotation de ladite partie rotative et une seconde zone magnétisée (M2) dans laquelle plusieurs parties magnétisées sont formées le long d'une direction circonférentielle de ladite seconde zone magnétisée (M2), les parties magnétisées de ladite seconde zone magnétisée (M2) étant positionnées dans des régions prédéterminées contenant des limites entre les parties magnétisées de ladite première zone magnétisée (M1) ;
un premier ensemble de capteurs (11U, 11V, 11W) disposé afin de transmettre, en tant que signaux de détection d'angle de rotation, des signaux ayant des niveaux correspondant aux polarités des parties polarisées de ladite première zone magnétisée (M1) ;
un second capteur (12) disposé afin de transmettre un signal de détection de position de référence ayant un niveau correspondant à la polarité de chacune des parties polarisées de ladite seconde zone magnétisée (M2) ; et
un moyen de détermination destiné à déterminer le niveau du signal de détection de position de référence provenant dudit second capteur (12),
**caractérisé en ce que**
une partie magnétisée de ladite seconde zone magnétisée (M2) est différente en termes de polarité par rapport aux parties magnétisées restantes de ladite seconde zone magnétisée (M2),
**en ce que**, de plus, le premier ensemble de capteurs (11U, 11V, 11W) se compose de trois premiers capteurs (11) disposés avec des espacements spécifiés le long d'une direction circonférentielle de ladite première zone magnétisée (M1),
**en ce que** ledit second capteur (12), en tant que capteur de position de référence (12), est disposé à un point intermédiaire entre deux (11U, V) desdits premiers capteurs (11U, 11V, 11W), et
**en ce que** ledit moyen de détermination est adapté afin d'utiliser un front d'un signal, délivré par l'un (11W) des premiers capteurs (11U, 11V, 11W) différent de ceux (11U, 11V) entre lesquels ledit second capteur (12) est disposé, en tant que déclencheur permettant de déterminer le niveau dudit signal de détection de position de référence, dans lequel ledit moyen de détermination est en outre adapté afin de déterminer une position dudit moteur (1) en tant que position de référence lors d'une rotation lorsque ledit niveau dudit signal de détection de position de référence est déterminé comme ayant une valeur prédéterminée.

2. Appareil de détection de rotation selon la revendication 1, dans lequel ladite seconde zone magnétisée (M2) est disposée de telle sorte que les parties magnétisées individuelles de celle-ci soient espacées.

3. Appareil de détection de rotation selon la revendication 1 ou 2, dans lequel ledit moteur (1) possède une bobine de stator triphasée (10) et est constitué de telle sorte que le signal de détection provenant dudit premier capteur magnétique (11) soit fourni à un moyen d'entraînement (19) destiné à fournir de l'énergie à ladite bobine de stator (10).

4. Appareil de détection de rotation selon l'une quelconque des revendications 1 à 3, dans lequel ledit moteur (1) est un démarreur couplé au moteur et est constitué de telle sorte que les signaux de détection provenant desdits premier et second capteurs magnétiques (11, 12) soient fournis à une unité de commande d'allumage (21) dudit moteur et à une unité de commande d'injection de carburant (20) de celui-ci.
